# EUROPEAN PATENT APPLICATION

(11) **EP 2 594 823 A1**
(43) Date of publication of application: **22.05.2013**
(21) Application number: 11767455.6
(22) Date of filing: 15.07.2011
(51) Int. Cl.: F16F 9/02

(54) **TELESCOPIC GAS SPRING**

(30) Priority: 16.07.2010 ES 201031090
(71) Applicant: Azol-gas, S. L., 01015 Vitoria (Álava) (ES)
(72) Inventor: JARAVA MELGAREJO, Gabriel, E-01015 Vitoria (Álava) (ES)
(74) Representative: Pons Ariño, Angel
(86) International application number: PCT/ES2011/070519
(87) International publication number: WO 2012/007629

(57) **Abstract**

A description is given of a telescopic gas spring (1), the interior body (2) of which comprises two subbodies (2a, 2b) that define two chambers (5a, 5b) separated by a dividing wall (3) provided with a housing for a communication conduit (4), said conduit (4) controlling the flow of gas exchanged between the chambers. This assembly is housed in a sliding manner inside an outer body (7), one end of a first rod (6a) being fastened to a base (8) of the outer body (7). In this way, by varying the cross section of the conduit (4), the relative speed of displacement between the interior body (2) and the first and second rods (6a, 6b) is regulated. By means of this spring (1) the speeds and stroke of conventional springs are increased at the same time as moderate sealing requirements are maintained.

## Description

### OBJECT OF THE INVENTION

The object of the present invention is a telescopic gas spring designed to withstand higher working speeds and frequencies than conventional gas springs.

### BACKGROUND OF THE INVENTION

A gas spring is mainly formed by a rod that moves along an inner cavity in a cylindrical body, said cavity being filled with a gas that is compressed when the rod moves in and expands when the rod moves out. Gas springs have been used in sheet metal stamping processes for some time as limiting force elastic elements. In this context, as manufacturers require making more parts at the same time, there is a steady increase in operating speeds of gas springs. However, there are factors that limit the speed at which these elements can work, especially the work limit of the gas seal.

The seals that are used to dynamically seal the gas are usually made of elastomeric materials with good properties in terms of wear resistance, elasticity and low permeability. The most limiting factor in relation to these seals is temperature. Exceeding the limit of the material causes a loss of elasticity and the appearance of permanent deformations that will make them no longer able to retain gas in the same way while the shaft moves on its surface. The temperature reached in a gas spring, in turn, depends on the work frequency, the linear velocity of sliding and the conditions of the spring installation.

The working speed influences how fast the seal is able to get deformed to copy the shape of the shaft surface and prevent gas from escaping. This speed has a given nominal value to the pressure and maximum temperatures supported. This speed limit can be exceeded if the conditions of pressure and temperature are below said maximum.

The influence of the work frequency is linked to the work temperature: in each cycle there is compression and expansion that substantially change the thermal state of the components and they are not fully compensated, leaving some residual heat in the gas spring. In addition, there is friction of the sealing and guiding elements which also introduce heat to the set and make its temperature rise. Depending on the heat generation and dissipation speeds, there will be a greater or lesser stable temperature.

Finally, the incorrect installation of the gas spring in a die causes it to move and oscillate in its housing, making the working force no longer completely axial, but having a significant component of lateral stress, which makes friction and temperature rise.

In addition, heat generated during the work of a gas spring is due to the working stroke and the frequency (the higher the stroke and frequency, more heat is generated). Thus, a maximum value for this function which is the product of the stroke used and the working frequency can be determined.

In a short stroke, the time during which there is friction of the joint with the rod in the same direction is short, and as the sealing surface changes with the direction of movement, when this alternates the contact area it manages to relief the heat generated by friction. In contrast, in long strokes, the rod is moving along the packing for much longer, causing higher local temperatures.

On the other hand, for a same sliding speed, if the working frequency is reduced to half, the life of the unit will be much higher. Although friction and heat generated are similar, the time to dissipate that heat is very different. If speed needs to be increased, the frequency needs to be reduced in the same proportion.

### DESCRIPTION OF THE INVENTION

The invention describes a novel telescopic spring basically formed by two conventional single springs joined together so that the speed and stroke of each individual spring is reduced, thus minimizing the temperature rise due to friction.

The telescopic gas spring of the invention comprises the following elements:
a) An inner body formed by a first and second hollow sub- bodies which define respectively a first and a second chamber separated by a partition wall, said partition wall having a housing for a passage pipe that connects said first and second chambers.
b) A first and a second rod arranged to slide inside the first and the second chamber.
c) An outer body that houses the inner body in a sliding way, with one end of the first rod attached to a base of said outer body, and where said base comprises a charge pipe fitted with a valve that connects the first chamber to the outside.
d) A passage pipe arranged in the partition wall, which allows control of gas flow between the first and second chambers, so that by varying the section of the same, the passage of gas speed can be increased or decreased, managing to regulate the relative sliding speed between the inner body and both rods.

Therefore, it can be seen that the first and second sub-bodies along with the partition wall and the first and second rods basically form two individual springs similar to those of the prior art and linked by the partition wall. This way, each working cycle of the telescopic spring of the invention is obtained as the sum of the working cycles of each of the "individual springs" that compose it. Thus, the total stroke of the telescopic spring will be the sum of the strokes of each of the two rods. This way, for a given total stroke, the speed of the telescopic spring can be increased by keeping down the values that must withstand the various seals and elements of the individual springs that form it.

According to a preferred embodiment of the invention, the dimensions of the sub-bodies and the rods are chosen so that their respective strokes are the same, this way the full stroke of the telescopic spring is twice the stroke of each individual rod.

According to another preferred embodiment of the invention, the section of the passage pipe is dimensioned so that the sliding speed of the second rod with regard to the second sub-body and the sliding speed of the first sub-body with regard to the first rod are equal, this way the total speed of the spring of the invention is twice of that of each of the individual springs.

### BRIEF DESCRIPTION OF THE FIGURES

Fig. 1 shows an axial section in a perspective view of a gas spring according to the prior art.
Fig. 2 shows an axial section of a telescopic gas spring according to the present invention.

### PREFERRED EMBODIMENT OF THE INVENTION

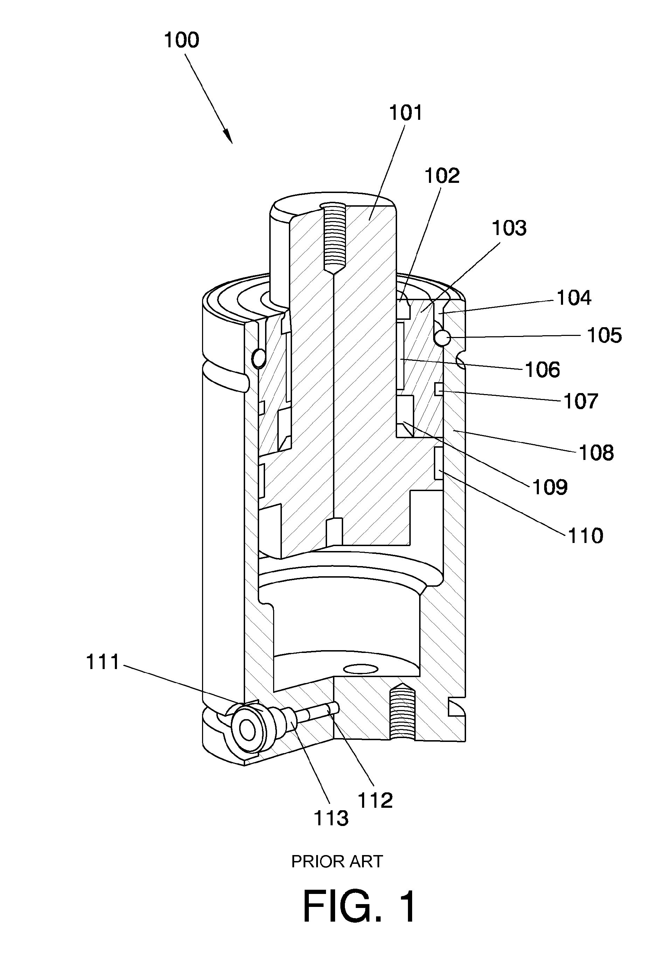

First, a conventional gas spring (100) shown in Fig. 1 is described. It can be seen how it is formed by a cylindrical body (108) in which a rod (101) is slided, being the inner cavity of the cylindrical body (108) filled with a gas. As the gas is confined inside the chamber, the compression and expansion of the gas when the rod falls or rises causes the spring (100) to behave like a spring or damper. The chamber is filled with gas through the passage pipe (113) fitted with a valve (112) and a stopper (111). Although they are not specifically the object of this invention, Fig. 1 shows the various elements necessary to achieve a seal between the body (108) and the rod (101), as well as a proper guide of said rod (101). Thus, a scraper (102) arranged around the rod (101) and enclosed by an upper cap (103) and a protector (104) have been represented. A ring (105), a tip (106), an O-ring (107), a gasket (109) and a guide (110) can also be seen.

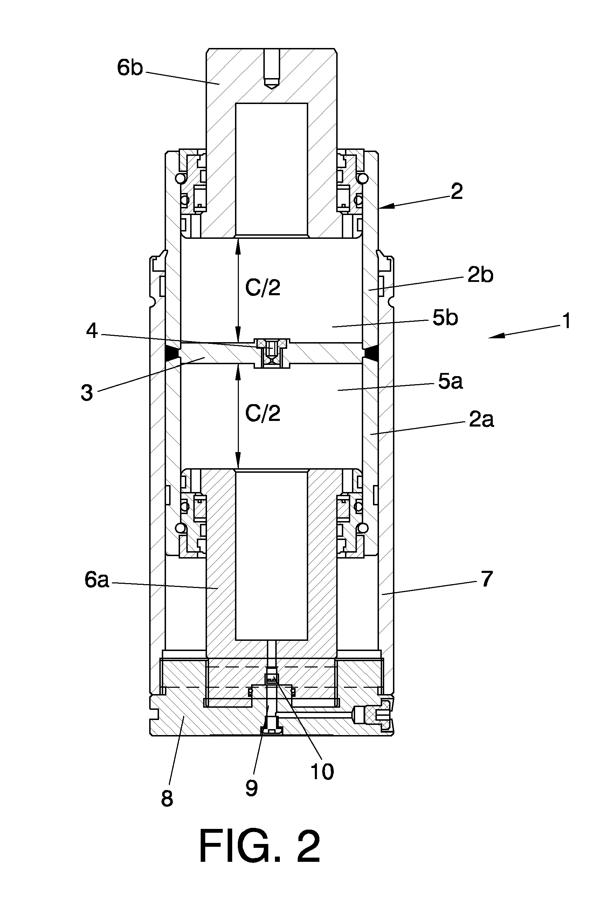

Fig. 2 on the other hand, shows a telescopic gas spring (1) according to the present invention comprising an inner body (2) formed by a first and a second inner sub-bodies (2a, 2b), whose respective first and second chambers (5a, 5b) are separated by a partition wall (3). The partition wall (3) comprises a housing for a passage pipe (4) that allows gas exchange between the first chamber (5a) and the second chamber (5b). In turn, within the respective chambers (5a, 5b) there is a first and second rod (6a, 6b) arranged so that they can slide vertically between a retracted position and an extended position. The inner body (2) is housed within an outer body (7), being one end of the first rod (6a) attached to the base (8) of said outer body (7). A charge pipe (9) fitted with a valve (10) connects the exterior of the telescopic spring (1) with the interior.

Thus, when vertical force is exerted downward on the second rod (6b), the pressure within the second chamber (5b) increases and, thanks to the passage pipe (4), it also increases within the first chamber (5a). Thus, thanks to the first rod (6a) being fixed to the base (8) of the outer body (7), the inner body (2) slides vertically downward a C/2 distance. In turn, the second rod (6b) also slides vertically in the same direction as the first an extra C/2 distance when introduced into the second sub-body (2b). The section of the passage pipe (4) is dimensioned so that the relative sliding speed of the first and second rods (6a, 6b) with respect to the inner body (2) is the same. This makes for the spring (1) to have a total stroke of length C at a speed V, while each individual rod (6a, 6b) has covered only C/2 along its sub-body (2a, 2b) corresponding to a speed V/2. The temperature rise of the seals and other sealing elements is reduced to near half.

## Claims

1. Telescopic gas spring (1) **characterized in that** it comprises:
- an inner body (2) formed by a first and second hollow sub-body (2a, 2b) which respectively define a first and second chamber (5a, 5b) separated by a partition wall (3), having said partition wall (3) accommodation for a passage pipe (4) which connects the first chamber (5a) and the second chamber (5b);
- a first and second rod (6a, 6b) arranged to slide inside the first and second chambers (5a, 5b);
- an outer body (7) that houses the inner body (2) in a sliding way, with one end of the first rod (6a) attached to a base (8) of said outer body (7), and where said base (8) comprises a charge pipe (9) fitted with a valve (10) that connects the first chamber (5a) to the outside; and
- a passage pipe (4) arranged in the partition wall (3), which allows control of gas flow between the first chamber (5a) and the second chamber (5b), so that by varying its section, the relative sliding speed between the inner body (2) and the first and second rods (6a, 6b) is regulated.

2. Spring (1) according to claim 1, wherein the dimensions of the sub-bodies (2a, 2b) and the rods (6a, 6b) are chosen so that their respective strokes are the same, this way the full stroke of the telescopic spring (1) is twice the stroke of that of each individual rods (6a, 6b).

3. Spring (1) according to any of claims 1-2, wherein the section of the passage pipe (4) is dimensioned so that the sliding speed of the second rod (6b) with regard to the second sub-body (5b) and the sliding speed of the first sub-body (2a) with regard to the first rod (6a) are equal, so that the total speed of the telescopic spring (1) is twice as the previous ones.
